# EUROPEAN PATENT SPECIFICATION

(11) **EP 3 310 067 B1**
(45) Date of publication and mention of the grant of the patent: **26.02.2020**
(21) Application number: 16306361.3
(22) Date of filing: 14.10.2016
(51) Int. Cl.: H04Q 3/64, H04Q 3/66, H04L 12/721, H04L 12/751, H04L 12/761, H04L 12/707, H04L 12/703, H04L 12/947

(54) **DATA PATH MANAGEMENT SYSTEM, CONTROLLER UNIT AND SWITCH UNIT**
DATENPFADVERWALTUNGSSYSTEM, STEUERGERÄTEEINHEIT UND SCHALTEINHEIT
SYSTÈME DE GESTION DE CHEMIN DE DONNÉES, UNITÉ DE COMMANDE ET UNITÉ DE COMMUTATION

(43) Date of publication of application: 18.04.2018
(73) Proprietor: Alcatel Lucent, 91620 Nozay (FR)
(72) Inventor: MAES, Jochen, 2018 Antwerp (BE)
(74) Representative: Novagraaf Technologies

(56) References cited:
- EP-A1- 1 471 705
- EP-A1- 2 536 034
- WO-A1-02/054680
- US-A1- 2003 147 400
- US-A1- 2010 045 447
- US-B1- 9 385 782

## Description

### Field of Invention

The field of the invention relates to a data path management system. Particular embodiments relate to the field of data path management in a point-to-multipoint network topology.

### Background

A problem in point-to-multipoint network and meshed topologies is that latency occurs at interfaces between physical media and at branching points, wherein multiple data paths are interconnected. Latency is caused by physical layer and medium access layer processing, which is performed at the interfaces and branching points in the network topology. This incurs processing resources at the interfaces and at branching points and leads to an under-utilization of the channel capacities within the network topology.

### Summary

A commonly described method reduces computational resources and latency by centralizing processing, or by re-using processing across multiple media. For example, forward error correction (FEC) can be done centrally, or alternatively the same FEC code words can be used end-to-end. This is done top-down in the protocol stack, e.g. all medium access layer processing occurs centrally, whereas physical layer processing occurs locally.

Another known method for establishing communication links is circuit switching, in which a dedicated and persistent communication path is established by switching the circuit prior to the start of the actual communication. This conventional method is slow, in that the establishment of the communication path is done upfront of the communication. Although circuit switching has close-to zero transfer delay during communication, it requires time and signaling overhead to establish the circuit switching prior to the communication.

US 2010/0045447 A1 discloses a network element for use in a power line communication system (PLCS), which network element provides communications to one or more user devices and which receives data from one or more sensors such as current sensors, a voltage sensor, a video camera, etc. The network element includes a controller which receives commands relating to the collection and transmission of the sensed data via the medium voltage power line.

US9385782 discloses an apparatus that comprises: a first signal interface configured to couple signals to and from a first communication medium that is coupled to one or more nodes of a first network that exchange signals according to at least one scheduling constraint of the first communication medium; a second signal interface configured to couple signals to and from a second communication medium that is coupled to one or more nodes of a second network that exchange signals according to a schedule compatible with scheduling information received from the first network; and signal coupling circuitry configured to activate at least one of the first and second signal interfaces to communicate information between a first network node and a second network node, according to the schedule.
The object of embodiments of the invention is to provide a data path management system for managing data paths in a point-to-multipoint topology, such that latency in the point-to-multipoint topology is reduced. More in particular, embodiments of the invention aim to provide a data path management system which is able to reduce noise and channel transients in the point-to-multipoint topology.
According to a first aspect of the invention there is provided a data path management system according to claim 1 . Further embodiments are set forth in the dependent claims 2-15. Embodiments of the invention are based *inter alia* on the insight that by controlling a switch based on data communication information from the MAC scheduler, the switch can be dynamically switched in real-time in accordance with the data communication information. When data communication on the first data path is needed, the switch is immediately switched to the first switch state, and when no data communication is needed on the first data path, the switch is immediately switched to the second switch state. In addition to lowering latency over the first data path, the switch allows to shield of noise and channel transients when no data communication is needed.

According to a preferred embodiment, the controller unit is located at the first network termination unit and is configured to send the control signal to the switch unit via the first part of the first data path.
In this manner, the switch unit can be controlled in view of both downstream and upstream data communication traffic. No additional means are required to provide the control signal to the switch unit since the first part of the existing first data path is used. In an exemplary embodiment, the first network termination unit corresponds to a distribution point unit (DPU) in the point-to-multipoint topology. The DPU typically has access to data communication information from the MAC scheduler. By providing the controller unit at the DPU, the controller unit has easy access to relevant data communication information originating from the MAC scheduler. The controller unit is configured for converting or "translating" the data communication information to a, preferably simple control signal to control the switch unit.
In a further exemplary embodiment, a secondary controller unit is located at the second and/or third network termination unit and is configured to send a secondary control signal to the switch unit via the second part of the first data path or the second data path respectively.

According to an exemplary embodiment the first part of the first data path comprises a first physical medium and he second part of the first data path comprises a second physical medium. The switch unit is configured to perform impedance matching between the first physical medium and the second physical medium.

By controlling the switch unit based on data communication information from the MAC scheduler, and matching the impedance of the first physical medium to the impedance of the second physical medium, latency at the interface between the first physical medium and the second physical medium (e.g. phone line - powerline interface) is reduced, and preferable removed, as compared to prior art systems which require physical layer processing and/or medium access layer processing at the interface between two physical media. According to a preferred embodiment the first physical medium is different from the second physical medium. Data management systems according to the state of the art require local processing to be executed at the interface between two different physical media, which incurs delays at the interface. By providing the switch unit to interface the first physical to the second physical medium via impedance matching, and by remotely controlling the switch unit based on data communication information from the MAC scheduler, no local processing is required, which results in at least a reduced latency at the interface.

According to a preferred embodiment, the controller unit is configured for generating the control signal based on said data communication information and on topology information, which is preferably comprised in a predefined look-up table comprising. By using a predefined look-up table comprising topology information, the control signal can be generated in real-time, such that hardly any delay or latency occurs when generating the control signal. As compared to known systems which use circuit-switching methods, latency which occurs before actual data communication is reduced.

The topology information may pertain to at least one of the following: a position of the switch unit within the topology, available switch states of the switch unit, available network termination units in the topology and their corresponding positions within the topology, and interconnections between the switch unit and any one of the available network termination units. In this manner, the controller unit can combine the data communication information pertaining to which network termination units can communicate with each other during a certain time-slot, with the topology information from the look-up table pertaining to which data path connects the relevant network termination units and which switch unit(s) is/are positioned on said data path, in order to manage the applicable data path with a significantly reduced latency as compared to the earlier described systems in the state of the art.

In a preferred embodiment the controller unit is configured for obtaining topology information at consecutive moments in time from at least one of the switch unit, the first network termination unit, the second network termination unit and the third network termination unit. As described above, a look-up table comprising topology information can be construed during initialization. By obtaining topology information at consecutive moments in time, the look-up table can be updated periodically and for example information on new network termination units and/or new switch units which have been added to the topology after initialization can be obtained.

According to a an exemplary embodiment the controller unit is configured for sending said control signal to the switch unit over at least one dedicated frequency, which at least one dedicated frequency is different from frequencies used for data communication signals over the first and second data path.

By sending the control signal on one or more dedicated frequencies which are different from the frequencies used for sending data communication signals, the data communication on the first and second data path is not disturbed by the control signal. Moreover, this allows for the control signal to be sent together with the data communication signals, for example via known frequency-division multiple access (FDMA) techniques. Depending on a specific physical layer configuration of the network topology, either a control signal over one dedicated frequency may suffice, or multiple dedicated frequencies may be needed. Further depending on the specific physical layer topology various controlling schemes may be applied such as on-off keying (OOK) or any other binary controlling scheme. With a binary controlling scheme, at least 2^{N} switch positions can be controlled using N distinct signal frequencies.

According to a preferred embodiment the controller unit is configured for sending said control signal to the switch unit over a dedicated frequency below 5MHz.

Bandwidth used for data communication signals is typically comprised between 5 MHz and 500MHz. This allows for one or more frequencies below 5 MHz to be used to send the control signal(s) to the switch unit(s), without interfering with the data communication signals. The controller unit is configured for sending said control signal to the switch unit, along with the data communication signal which needs to pass the switch unit. In response to the control signal, the switch unit can switch between the at least first and second switch state in real-time, as required for the data communication signal to reach the corresponding receiving network termination unit, as dictated by the MAC scheduler.

According to a further developed embodiment the switch unit comprises an amplifier which is configured for compensating for attenuation occurring over at least one of the first data path and second data path.

By adding an amplifier to the switch unit, the switch unit may be able to compensate for media-specific attenuation characteristics or other attenuation effects. According to an exemplary embodiment the amplifier is pre-configured and adapted to the first part and second part of the first data path which are interfaced by the switch unit. Amplification may include equalization and signal conditioning, for instance to reduce the delay spread imposed on the data communication signal as it travels over the physical medium of the first or second data path. To this end, the amplifier may include an equalizer and/or a signal conditioning unit.

According to a preferred embodiment, the controller unit is further configured to control the amplifier.

In this manner, by monitoring the received power and taking into account a desired output power, the amplifier can be remotely controlled. In an alternative embodiment the amplifier may be self-configuring. This way modification to the amplification needs can be managed in a controlled way in order not to break channel equalization over the data path or can be carried out with a sufficiently low gradient. By remotely controlling the amplifier, the amplifier can be configured and re-configured depending on case-specific needs.

According to a preferred embodiment, the switch unit comprises a remote power unit configured for performing at least one of the following:
- receiving power from at least one of the first and second network termination unit;
- feeding power to at least one of the first and second network termination unit when the switch unit is connected to an electrical grid; and
- passing through power from the first to the second network termination unit, or vice versa.

Power which is contained in the control signal may be sufficient to maintain the switch unit in the correct switch state for the duration of the data communication. However, depending on specific needs regarding the switching function, amplification function, etc. Additional power may be provided to the switch unit in various ways as described above. The three described functionalities may be combined or may be implemented independently. In an exemplary embodiment, the second part of the data path is a power cable and the first part of the data path is another copper medium. In this embodiment, the switch unit is plugged in a power socket and is able to remote power the first network termination unit over the other copper medium. In another exemplary embodiment, the switch unit is remote powered from the second network termination unit, and the switch unit passes through power to the first network termination unit. Alternatively, when the second part of the data path is a power cable, and the first part of the data path is another copper medium, and if the first network termination unit does not require remote power, the switch will filter out the power current using a high pass filter.

According to a an exemplary embodiment, the switch unit is located on the second data path, and configured for interfacing a first part of the second data path to a second part of the second data path, wherein the first part of the second data path coincides with the first part of the first data path, and for further being switchable between at least a third switch state wherein the second data path is established, and a fourth switch state wherein the second data path is interrupted; and - the controller unit is further configured for generating a control signal based on said data communication information, and for sending said control signal to the switch unit to control the switch unit to switch between the first, second, third and fourth switch state in accordance with the data communication information.

In an exemplary embodiment, the second and fourth switch state are the same switch state, more in particular the switch state wherein both the data path and second data path are interrupted.

In another exemplary embodiment, the fourth switch state connects the second part of the first data path and the second part of the second data path to create a third data path. In this way, a multipoint-to-multi-point network topology is created to enable device-to-device communication. In this manner, device-to-device communication can be established over the third data path when the switch is in the fourth switch state, in which the switch unit blocks off noise and channel transients originating on the first part of the first data path.

According to a preferred embodiment, the data path management system further comprises:
- a secondary switch unit located on the second data path and configured for interfacing a first part of the second data path to a second part of the second data path and for being switchable between at least a first secondary switch state wherein the second data path is established, and a second secondary switch state wherein the second data path is interrupted; and the controller unit is configured for generating a secondary control signal based on said data communication information and for sending said secondary control signal to the secondary switch unit to control the secondary switch unit to switch between the first secondary switch state and the second secondary switch state in accordance with said data communication information. The primary switch unit may be located on the data path between the controller unit and the secondary switch unit. In that case, the secondary switch unit will be configured to enter a pre-defined switch state when the primary switch unit is directed to break the path between the controller unit and the secondary switch unit. Alternatively, when the primary switch unit is directed to break the data path between the master controller unit and the secondary switch unit, a slave controller unit or secondary controller unit may temporary take over control over the local domain which is temporary broken off from the main domain. In this way separate communication streams are established in separate parts of the multipoint-to-multipoint network.

According to a an exemplary embodiment the switch unit is located on the second data path, and configured for interfacing a first part of the second data path to a second part of the second data path, wherein the first part of the second data path coincides with the first part of the first data path, and the second part of the second data path at least partially coincided with the second part of the first data path.

Data communication between the second network termination unit and the third network termination unit can be established when the switch unit is switched to the second switch state wherein the first and thus the second data path are interrupted. In this manner, noise coming from the first network termination unit can be blocked.

According to a preferred embodiment the switch unit comprises an analog-to-digital convertor, a processing unit, and a digital-to-analog convertor.

In this manner, when employed on the data communication signals, the switch unit can be configured to perform at least one of the following functions: lower physical layer processing such as fast Fourier transform, digital channel equalization, and (de-)mapping of quadrature amplitude modulated signals. In this way, the bit-loading in discrete multi-tone systems can be optimized to the signal-to-noise characteristics of the first and second parts of the data path respectively. When employed on the control signal(s) the switch unit can be configured to perform at least one of the following functions; communication between the switch unit and the controller unit, for exchange of capabilities or configuration of the switch unit, assigning control signals to each one of the respective switch units in the data path management system, obtaining status data regarding the respective switch unit and communicating said obtained status data to the controller unit.

The skilled person will understand that the hereinabove described technical considerations and advantages for system embodiments also apply to the below described corresponding apparatus and method embodiments, *mutatis mutandis.*

According to a second aspect of the invention, there is provided a network termination unit provided with a controller unit which is configured to control a switch unit in a data path management system according to any one of the preceding embodiments.

According to a third aspect of the invention, there is provided a switch unit which is configured to be controlled by a controller unit in a data path management system according to any one of the above described embodiments.

According to a fourth aspect of the invention, there is provided a data path management method for managing data paths in a point-to-multipoint topology, the point-to-multipoint topology comprising at least a first data path, between a first network termination unit and a second network termination unit, and a second data path, between any one of the first and second network termination unit and a third network termination unit, wherein data communication in the point-to-multipoint topology is managed by a media access control scheduler, the data path management method comprising:
- interfacing a first part of the first data path to a second part of the first data path by providing a switch unit which is configured to be switchable between at least a first switch state wherein the first data path is established, and a second switch state wherein the first data path is interrupted;
- obtaining data communication information from the media access control scheduler;
- generating a control signal based on said data communication information; and
- sending said control signal to the switch unit to control the switch unit to switch between said at least first and second switch state in accordance with the obtained data communication information.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1A illustrates schematically an exemplary embodiment of a data path management system comprising a switch unit and a controller unit according to the invention in a point-to-multipoint network topology;
Figures 1B and 1C illustrate schematically exemplary embodiments of a data path management system comprising a switch unit and a controller unit according to the invention in alternative point-to-multipoint network topologies;
Figure 2 illustrates schematically a preferred embodiment of a data path management system according to the invention;
Figure 3A illustrates a data path management system according to the state of the art, wherein latency occurs at the interface of two different physical mediums;
Figure 3B illustrates an exemplary embodiment of a data path management system according to the invention, wherein latency at the interface of two different physical mediums is at least reduced;
Figures 4A and 4B illustrate schematically exemplary embodiments of a data path management system according to the invention;
Figure 5 illustrates schematically a preferred embodiment of a data path management system according to the invention;
Figure 6 illustrates schematically a preferred embodiment of a data path management system according to the invention, wherein the data path management system comprises a secondary switch unit;
Figure 7 illustrates schematically a further preferred embodiment of a data path management system according to the invention; and
Figure 8 illustrates schematically a further exemplary embodiment of a data path management system according to the invention.

### Description of embodiments

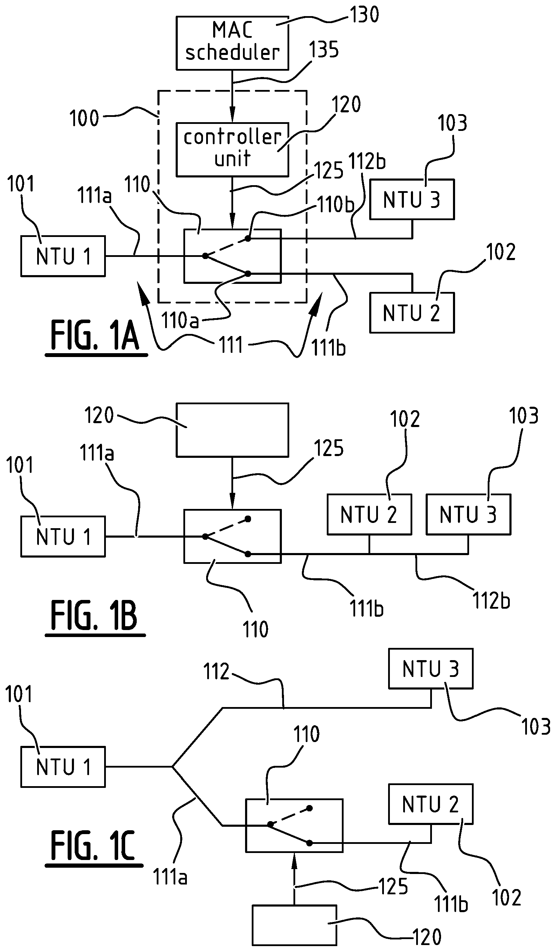

Figure 1A illustrates a data path management system 100 for managing data paths in a point-to-multipoint topology, wherein the point-to-multipoint topology comprises at least a first data path 111a, 111b, between a first network termination unit 101 and a second network termination unit 102, and a second data path 111a, 112b, between the first network termination unit 101 and a third network termination unit 103. Data communication in the point-to-multipoint topology is managed by a media access control (MAC) scheduler 130. The data path management system 100 comprises a switch unit 110 located on the first data path 111 configured for interfacing a first part 111a of the first data path 111 to a second part 111b of the first data path 111 and configured to be switchable between at least a first switch state 110a wherein the first data path 111 is established, and a second switch state 110b wherein the first data path is interrupted. In the illustrated embodiment, the second switch state 110b corresponds with a switch state in which the second data path 111a, 112b is established. In addition, a third switch state could be added, wherein both the first data path 111a, 111b and the second data path 111a, 112b are interrupted. The data path management system 100 further comprises a controller unit 120 configured for obtaining data communication information 135 from the media access control scheduler 130, for generating a control signal 125 based on said data communication information 135, and for sending said control signal to the switch unit 110 to control the switch unit 110 to switch between said at least first 110a and second switch state 110b in accordance with the obtained data communication information 135. In figure 1A the controller unit 120 is located remotely from the switch unit 110. The controller unit 120 has access to data communication information 135 from the MAC scheduler 130, which data communication information 135 pertains to which network termination units (NTU) can "talk" to each other, and at which moment in time. In other words, via the data communication information 135 from the MAC scheduler 130 time slots are allocated for communication between certain NTU's. The controller unit 120 is configured to generate a control signal 125 based on the obtained data communication information 135 by converting or translating the obtained data communication information 135 to a control signal 125 to control the switch unit 110 in accordance with the data communication information 135. In other words, the controller unit 120 is configured to determine from the data communication information 135 which data path should be established or interrupted at which time slot. The translating can be performed in real-time using a look-up table. The look-up table is generated during initialization, and updated periodically. During the initialization and/or the update, the controller unit 120 toggles through at least a fraction of the possible switch configurations in the topology and attempts to discover yet unregistered network termination units in the network. Once an unregistered network termination unit is discovered, the controler unit 120 will register the network termination unit in its look-up table along with the corresponding switch positions or switch states of one or more relevant switch units on the data path to the network termination unit which is about to be registered. In a similar way, the data path management system has means to discover newly installed switch units along with their capabilities and/or functionalities, either by having the newly installed switch unit to advertise its presence in a control frequency band, or by letting the switch unit respond to regular discovery signals from the controller unit. Based on said determination, the controller unit 120 generates a control signal 125 which may be a single-frequency signal or may be a multiple-frequency signal. Although figure 1A illustrates a point-to-multipoint network topology comprising a first 101, second 102 and third network termination unit 103, it is clear that the data path management system 100 according to the invention is applicable, in a similar way, to alternative multipoint-to-multipoint and mesh topologies comprising more than three network termination units and multiple data paths between the network termination units. Depending on the specific topology, the data path management system may comprise more than one switch unit 110 and/or the switch unit(s) may be switchable between more than two switch states. In a preferred embodiment, the control signal comprises a dedicated frequency band, e.g. one frequency per data path in the point-to-multipoint topology or a binary encoded set of frequencies within the frequency band.
In figure 1A the dotted line in the switch unit 110 denotes an available switch state 110b which is interrupted. This notation is used throughout the figures. The full line connected to switch state 110a denotes an available switch state, which is currently activated.

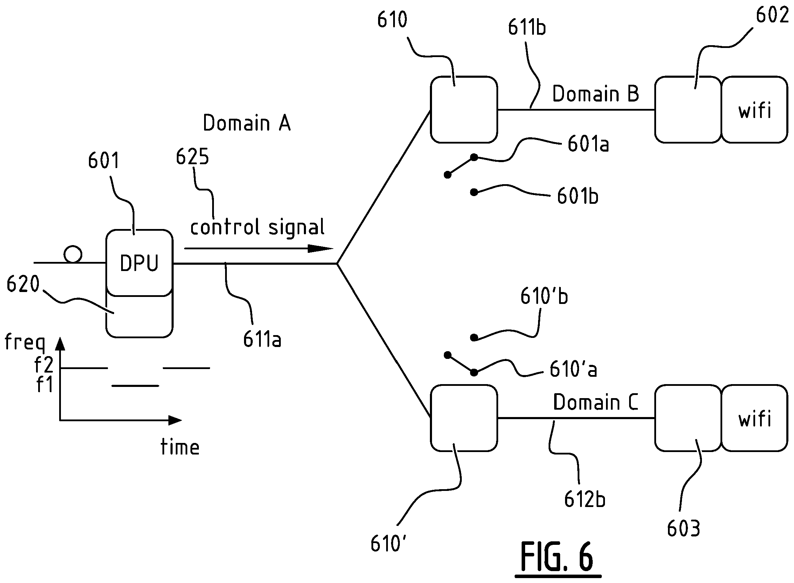

Figures 1B and 1C illustrate the use of a data path management system comprising a controller unit 120 and switch unit 110 according to the invention, in various point-to-multipoint topologies which differ from the topology illustrated in figure 1A. In figure 1A the second parts 111b and 1112b of the first data path and second data path, respectively, are both interfaced to the first part 111a by the switch unit 110. Second parts 111b and 112b each comprise a separate physical medium. In figure 1B both the second network termination unit 102 and the third network termination unit 103 are connected to the same switch state of the switch unit 110. The first data path and the second data path share parts 111a and 111b, whereas part 112b is exclusively reserved for the second data path between the first network termination unit 101 and the third network termination unit 103. In figure 1C, the first data path 111a, 111b corresponds to the first data path 111 as illustrated in figure 1A. However, in figure 1C the third network termination unit 103 is connected to the first network termination unit 101 via a direct second data path 112, without a switch unit. In an alternative embodiment a secondary switch unit may be located on the second data path 112, as will be illustrated in figure 6.

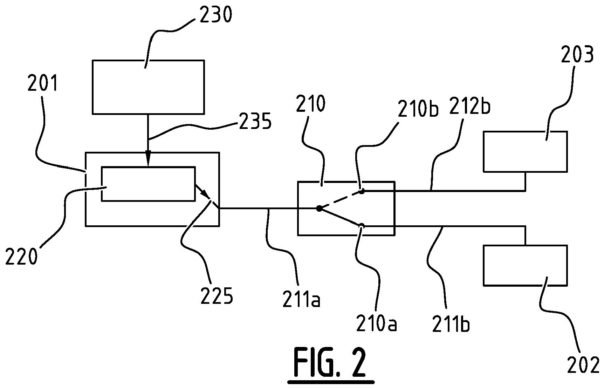

Figure 2 illustrates a preferred embodiment of the data management system according to the invention, wherein the controller unit 220 is located at the first network termination unit 201 and is configured to send the control signal 225 to the switch unit via the first part 211a of the first data path 211a, 211b. This is indicated by the arrow connecting the controller unit 220 to the first part 211a of the first data path 211a, 211b. The illustrated point-to-multipoint topology corresponds with the topology as illustrated in figure 1A. However, it is clear to the skilled person that the data management system as illustrated in figure 2 is applicable in a similar way to various alternative topologies, including the topologies as illustrated in figures 1B and 1C. The switch unit 210 can be controlled in view of both downstream and upstream data communication traffic. No additional means are required to provide the control signal 225 to the switch unit 210 since the first part 211a of the existing first data path 211a, 211b is used.
In a further exemplary embodiment, a secondary controller unit (not shown) is located at the second 202 and/or third network termination unit 203 and is configured to send a secondary control signal (not shown) to the switch unit 210 via the second part 211b, 212b of the first data path or the second data path, respectively.

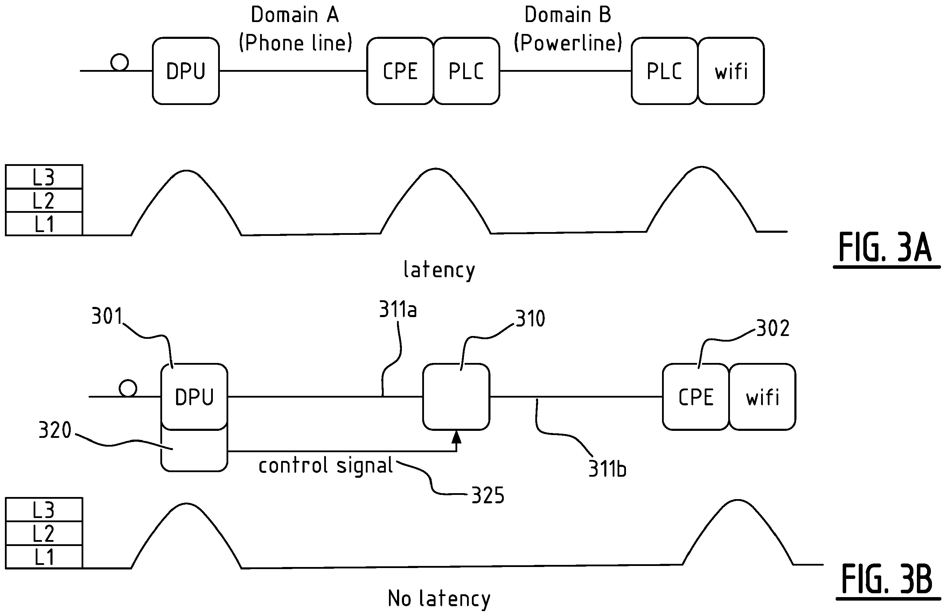

Figure 3A illustrates a data management system according to the state of the art. A link from the access network to a user device often comprises hops over multiple media. For example, a copper link (phone line) originating from a distribution point unit (DPU) may be terminated in a central gateway such as a customer premises equipment (CPE), after which the signal is converted to a power line communication (PLC) to reach a certain room. At the PLC termination, the signal may then be converted to Wi-Fi to reach a user device. This method can be described as packet switching. Each hop requires its own physical layer and medium access layer processing at the interface between the two media, which incurs delay and processing resources. Moreover, this leads to an under-utilization of the data path capacities. The obtained quality of service in the state of the art system restricts the use of for example future 5G services, which are latency critical. In figure 3A L1, L2 and L3 refer to the physical layer (LI) and media access layers (L2 and L3) of the Open Systems Interconnection (OSI) model.

Figure 3B illustrates an exemplary embodiment of the data path management system according to the invention, wherein the first part 311a of the first data path 311a, 311b comprises a first physical medium (e.g. copper phone line) and wherein the second part 311b of the first data path 311a, 311b comprises a second physical medium (e.g. power line). For illustrative purposes, only the first data-path 311a, 311b is shown in figure 3B. However, it is clear to the skilled person that the illustrated principles are applicable to alternative point-to-multipoint topologies comprising multiple data paths. The switch unit 310 is configured to perform impedance matching between the first physical medium 311a and the second physical medium 311b. To this end, the switch unit 310 comprises line interface circuitry at either side of the switch. Both on the side where the switch is connected to the first medium 311a and on the side where the switch unit 310 is connected to the second medium 311b, appropriate line interface circuitry is provided in the switch unit 310 such that the impedance of the first medium 311a is matched to the impedance of the second medium 311b. Exemplary embodiments of a switch unit may be configured for matching a termination to a balanced 130 Ohm twisted pair, or a 75 Ohm coax, or a power line (including isolating from the 220V mains), etc. It is clear to the skilled person that depending on the nature of the physical media connected to the switch unit 310, the switch unit 310 may comprise any other appropriate line interface circuitry. Although the controller unit 320 is schematically illustrated as being attached to the first network termination unit 301, in this case a DPU, it is clear to the skilled person that the controller unit 320 can be connected to the first network termination unit 301, or be comprised in the first network termination unit 301. Further, the arrow in figure 3B illustrates that a control signal 325 originating at the controller unit 320 is send to the switch unit 310. In a preferred embodiment, the control signal is sent to the switch unit 310 over the first part 311a of the first data path 311a, 311b. Further in figure 3B an optional Wi-Fi block is shown, which is connected to the second network termination unit 302, in this case a customer premises equipment (CPE). However, it is clear to the skilled person that any other domain may be connected to the CPE 302

In the illustrated embodiment, the first network termination unit 301 corresponds to a distribution point unit (DPU) in the point-to-multipoint topology. The DPU typically has access to data communication information from the MAC scheduler (not shown). By providing the controller unit 320 at the DPU, the controller unit 320 has easy access to relevant data communication information originating from the MAC scheduler. The controller unit 320 is configured for converting or "translating" the data communication information to a, preferably simple control signal 325 to control the switch unit. In the illustrated embodiment, a simple control signal over one dedicated frequency may suffice to control the switch unit 310 to switch between a first switch state wherein the first data path 311a, 311b is established, and a second switch state wherein the first data path 311a, 311b is interrupted. This way an analog switch 310 is provided which forwards physical layer signals from one physical medium 311a to another 311b under control of a remote controller unit 320. The switch unit 310 itself doesn't perform any data path processing, and does not make any control decisions, which results in at least a reduction of latency at the medium interface as compared with the state of the art system as illustrated in figure 3A.
As opposed to circuit switching, the proposed data path management system enables fast and real-time switching by sending switch control information in the form of a control signal alongside the data communication signals.

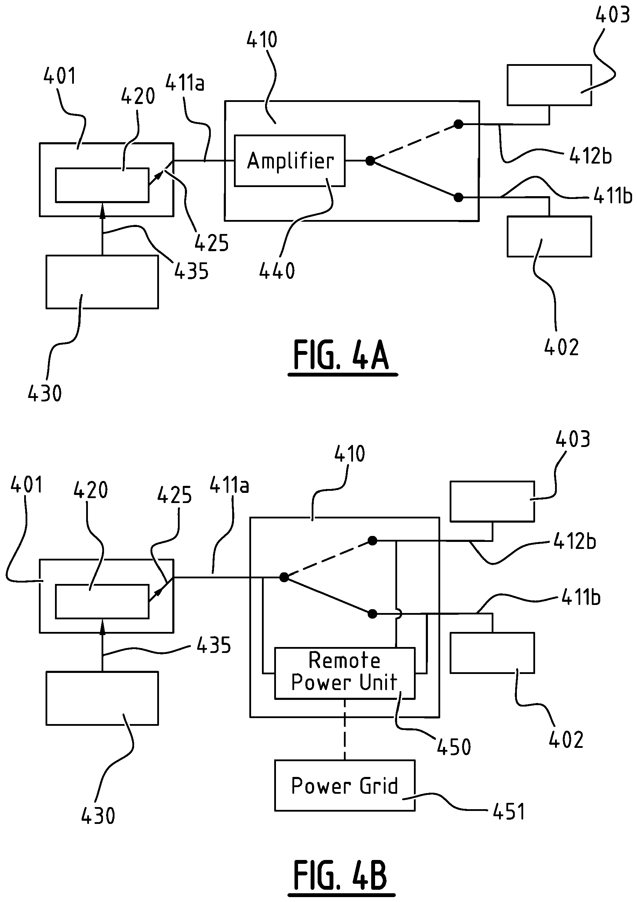

Figure 4 illustrates an exemplary embodiment wherein the switch unit 410 comprises an amplifier 440 which is configured for compensating for attenuation occurring over at least one of the first data path 411a, 411b and second data path 411a, 411b.
By adding an amplifier to the switch unit 410, the switch unit 410 is able to compensate for media-specific attenuation characteristics or other attenuation effects. According to an exemplary embodiment the amplifier is pre-configured and adapted to the first part 411a and second part 411b of the first data path 411a, 411b which are interfaced by the switch unit 410.
According to a preferred embodiment, the controller unit 420 is further configured to control the amplifier. In this manner, by monitoring the received power and taking into account a desired output power, the amplifier can be remotely controlled, for example by the controller unit 420 via control signal 425. In an alternative embodiment the amplifier may be self-configuring. This way amplification needs can be managed in a controlled way in order not to break channel equalization over the data path or can be carried out with a sufficiently low gradient. By remotely controlling the amplifier, the amplifier can be configured and re-configured depending on case-specific needs. The skilled person understands that the principles of the invention are applicable to various network topologies in addition to the exemplary network topologies which are shown in the figures.

According to a further embodiment, the switch unit 410 comprises at least one of a radiofrequency up convertor and a radiofrequency (RF) down convertor (not shown), respectively. For example when at least one of the first 411a and second physical medium 411b is for example coax or Wi-Fi using pass-band communication, the RF up/down convertor allows for the signal to be successfully interfaced to the other medium.

Figure 4B illustrates an exemplary embodiment wherein the switch unit 410 comprises a remote power unit 450 which is configured for performing at least one of the following:
- receiving power from at least one of the first 401 and second network termination unit 402, 403;
- feeding power to at least one of the first 401 and second network termination unit 402, 403 when the switch unit 410 is connected to an electrical grid 451; and
- passing through power from the first 401 to the second network termination unit 402, 403, or vice versa. Power which is contained in the control signal 425 may be sufficient to maintain the switch unit 410 in the correct switch state for the duration of the data communication. However, depending on specific needs regarding the switching function, amplification function, etc. Additional power may be provided to the switch unit 410 in various ways as described above. The three described functionalities may be combined or may be implemented independently.

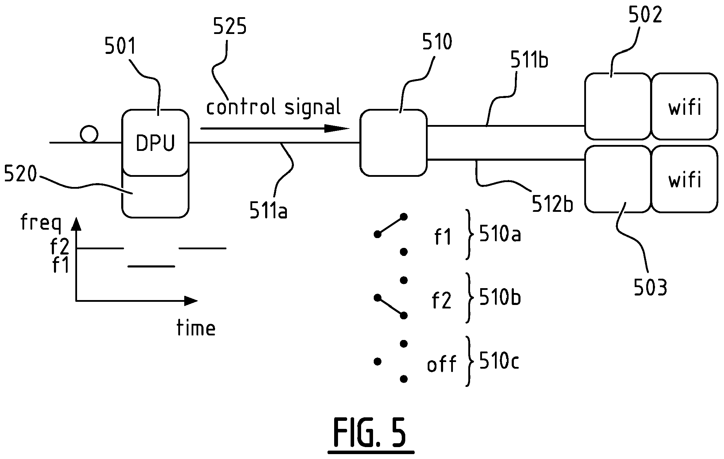

Figure 5 illustrates an exemplary embodiment wherein the switch unit 510 is located on the second data path 511a, 511b, and configured for interfacing a first part 511a of the second data path 511a, 512b to a second part 512b of the second data path 511a, 512b, wherein the first part 511a of the second data path coincides with the first part 511a of the first data path, and for further being switchable between at least a third switch state 510b wherein the second data path 511a, 512b is established, and a fourth switch state 510a, 510c wherein the second data path is interrupted. The controller unit 520 is further configured for generating a control signal 525 based on said data communication information (not shown), and for sending said control signal 525 to the switch unit 510 to control the switch unit 510 to switch between the first, second, third and fourth switch state in accordance with the data communication information.
In the illustrated embodiment, the second 510c and fourth 510c switch state are the same switch state 510c, more in particular the switch state wherein both the first data path 511a, 511b and second data path 511a, 512b are interrupted.
In the illustrated embodiment the controller unit 520 is configured for generating a control signal 525 comprising two frequencies f1, f2 and for sending the control signal 525 over the first part 511a of the first data path to the switch unit 510. As illustrated by switch states 510a, 510b and 510c, the switch unit 510 may be controlled to switch to switch state 510a by means of a signal of frequency f1, to switch to switch state 510b by means of a signal of frequency f2, and be controlled to switch to switch state 510c, the off-state, when no control signal is received.

Figure 6 illustrates a preferred embodiment, wherein the data path management system further comprises a secondary switch unit 610' located on the second data path 611a, 612b and configured for interfacing a first part 611a of the second data path to a second part 612b of the second data path and for being switchable between at least a first secondary switch state 610'a wherein the second data path is established, and a second secondary switch state 610'b wherein the second data path is interrupted. The controller unit 620 is configured for generating a secondary control signal, which is comprised in the control signal 625, based on said data communication information (not shown) and for sending said secondary control signal 625 to the secondary switch unit 610' to control the secondary switch unit to switch between the first secondary switch state and the second secondary switch state in accordance with said data communication information.
The controller unit 620 is configured for sending said control signal to the switch unit over at least one dedicated frequency, preferably below 5MHz, which at least one dedicated frequency is different from frequencies used for data communication signals over the first and second data path.

By sending the control signal on one or more dedicated frequencies which are different from the frequencies used for sending data communication signals, the data communication on the first and second data path is not disturbed by the control signal. Moreover, this allows for the control signal to be sent together with the data communication signals, for example via known frequency-division multiple access (FDMA) techniques. Depending on a specific physical layer configuration of the network topology, either a control signal over one dedicated frequency may suffice, or multiple dedicated frequencies may be needed. Further depending on the specific physical layer topology various controlling schemes may be applied such as on-off keying (OOK) or any other binary controlling scheme.
Bandwidth used for data communication signals is typically comprised between 5 MHz and 500 MHz. This allows for one or more frequencies below 5 MHz to be used to send the control signal(s) to the switch unit(s), without interfering with the data communication signals. The controller unit is configured for sending said control signal to the switch unit, along with the data communication signal which needs to pass the switch unit. In response to the control signal, the switch unit can switch between the at least first and second switch state in real-time, as required for the data communication signal to reach the corresponding receiving network termination unit, as dictated by the MAC scheduler.
Since the switch unit doesn't need to have full knowledge on the MAC schedule, the medium access aware switch unit can be controlled remotely via simple signaling via the controller unit, such as on-off keying at one or more dedicated frequencies. Different frequencies are allocated to different switches. In a point-to-multipoint topology, if the switch unit is located on a branching point connecting multiple data paths, the switch unit 'listens' to multiple control signals, one for each branch or data path. The switch unit is aware of the medium access control layer, but doesn't perform any medium access data path processing, nor does it make medium access control decisions.
When no communication is needed towards the network termination units served by the switch unit, the switch is switched to an off-state. This allows for screening off any noises ingressing for example the in-home section, such as screening off impulsive noise on the power line. In this way, only links comprising a PLC section will see PLC specific ingress.

According to an exemplary embodiment a twisted pair drop comprises multiple end points inside a single home, corresponding to bridged taps or phone outlets. Traditionally, a CPE is placed centrally to remove bridge tap issues. With the data path management system according to the invention, it suffices to place a switch unit at the central location, allowing multiple end points (NTU's) inside the home on the existing phone wiring, while removing the effects of the bridged taps such as power splitting, delay spread increase and destructive interference with the reflected signal.

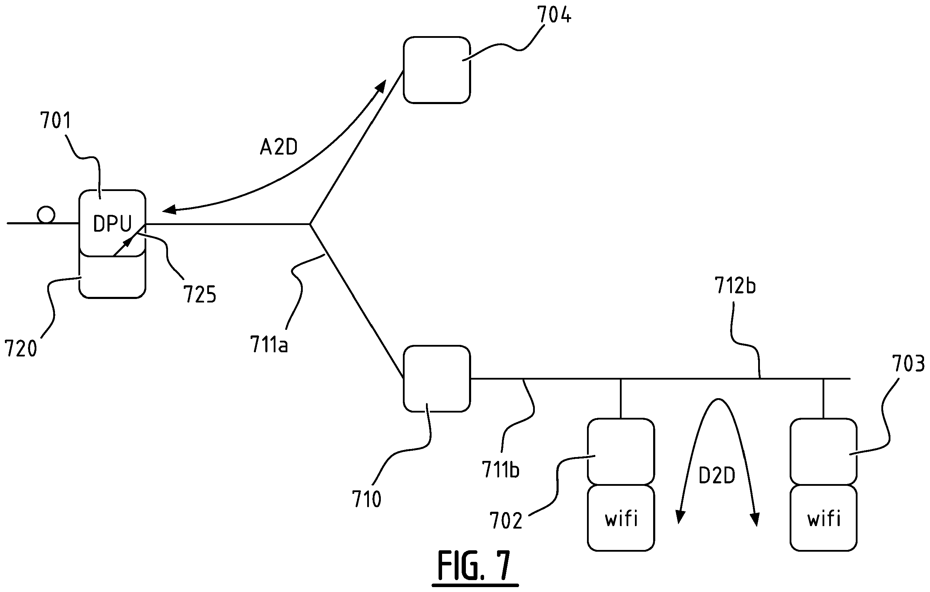

Figure 7 illustrates an embodiment wherein the switch unit 710 is located on the second data path 711a, 711b, 712b and configured for interfacing a first part 711a of the second data path to a second part 711a, 712b of the second data path, wherein the first part 711a of the second data path coincides with the first part 711a of the first data path, and the second part 711a, 712b of the second data path at least partially coincides with the second part 711b of the first data path.
Data communication between the second network termination unit 702 and the third network termination unit 703 can be established when the switch unit 710 is switched to the second switch state wherein the first and thus the second data path are interrupted. In this manner, noise coming from the first network termination unit 701 can be blocked. In the illustrated embodiment, access-to-device communication (A2D) between the first network termination unit 701 and a fourth network termination unit 704 and device-to-device communication (D2D) between Wi-Fi devices at the second network termination unit 702 and third network termination unit 703 is allowed to occur simultaneously on separate domains of the in-home network located behind the switch unit 710, when the switch unit 710 is switched to a switch state wherein the first data path 711a, 711b is interrupted.

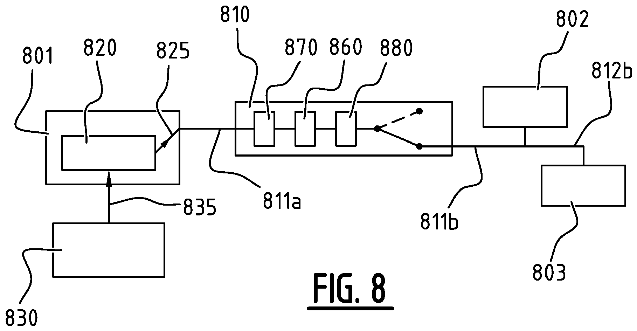

Figure 8 illustrates an embodiment wherein the switch unit 810 comprises an analog-to-digital convertor 870, a processing unit 860, and a digital-to-analog convertor 880.
In this manner, when employed on the data communication signals, the switch unit 810 can be configured to perform at least one of the following functions: lower physical layer processing such as fast Fourier transform, digital channel equalization, and (de-)mapping of quadrature amplitude modulated signals. Although Figure 8 explicitly shows a diagram of a switch inside the switch unit 810, it is understood that the interrupting of the data path 811b can also be achieved using the analog-to-digital convertor 870, the processing unit 860 or the digital to analog convertor 880. When employed on the control signal(s) (not shown), the switch unit 810 can be configured to perform at least one of the following functions; communication between the switch unit (810) and the controller unit (820), for exchange of capabilities or configuration of the switch unit (810), assigning control signals 825 to each one of the respective switch units 810 in the data path management system, obtaining status data regarding the respective switch unit 810 and communicating said obtained status data to the controller unit 820.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "processors", "units" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor", "unit" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. A data path management system (100) for managing data paths in a point-to-multipoint topology, the point-to-multipoint topology comprising at least a first data path, between a first network termination unit and a second network termination unit, and a second data path, between any one of the first and second network termination unit and a third network termination unit, wherein data communication in the point-to-multipoint topology is managed by a media access control scheduler, the data path management system comprising:
- a switch unit (110) located on the first data path, configured for interfacing a first part of the first data path to a second part of the first data path and configured to be switchable between at least a first switch state wherein the first data path is established and a second switch state wherein the first data path is interrupted;
- a controller unit (120) configured for obtaining from the media access control scheduler data communication information pertaining to which network termination unit can communicate with another network termination unit during a given time-slot, for generating a control signal based on said data communication information, and for sending said control signal to the switch unit (110) to control the switch unit to switch between said at least first and second switch states in accordance with the obtained data communication information.

2. The data path management system (100) according to claim 1, wherein the controller unit (120) is located at the first network termination unit and is configured to send the control signal to the switch unit (110) via the first part of the first data path.

3. The data path management system (100) according to claim 1 or 2, wherein the first part of the first data path comprises a first physical medium and wherein the second part of the first data path comprises a second physical medium, and wherein the switch unit (110) is configured to perform impedance matching between the first physical medium and the second physical medium.

4. The data path management system (100) according to any one of the preceding claims, wherein the controller unit (120) is configured for generating the control signal based on said data communication information and on a predefined look-up table comprising topology information.

5. The data path management system (100) according to claim 4, wherein the topology information pertains to at least one of a position of the switch unit (110) within the topology, available switch states of the switch unit (110), available network termination units in the topology and their corresponding positions within the topology, and interconnections between the switch unit (110) and any one of the available network termination units.

6. The data path management system (100) according to claim 4 or 5, wherein the controller unit (120) is configured for obtaining topology information at consecutive moments in time from at least one of the switch unit (110), the first network termination unit, the second network termination unit and the third network termination unit.

7. The data path management system (100) according to any one of the preceding claims, wherein the controller unit (120) is configured for sending said control signal to the switch unit (110) over at least one dedicated frequency, which at least one dedicated frequency is different from frequencies used for data communication signals over the first and second data path.

8. The data path management system (100) according to claim 7, wherein the controller unit (120) is configured for sending said control signal to the switch unit over a dedicated frequency below 5MHz.

9. The data management system (100) according to any one of the preceding claims, wherein the switch unit (110) comprises a remote power unit configured for:
- receiving power from at least one of the first and second network termination unit;
- feeding power to at least one of the first and second network termination unit when the switch unit (110) is connected to an electrical grid; and/or
- passing through power from the first to the second network termination unit, or vice versa.

10. The data path management system (100) according to any one of the preceding claims, wherein
- the switch unit (110) is located on the second data path, and configured for interfacing a first part of the second data path to a second part of the second data path, wherein the first part of the second data path coincides with the first part of the first data path, and for further being switchable between at least a third switch state wherein the second data path is established, and a fourth switch state wherein the second data path is interrupted; and
- the controller unit (120) is further configured for generating a control signal based on said data communication information, and for sending said control signal to the switch unit to control the switch unit to switch between the first, second, third and fourth switch state in accordance with the data communication information.

11. The data path management system (100) according to any one of the preceding claims 1-9, further comprising:
- a secondary switch unit (610') located on the second data path and configured for interfacing a first part of the second data path to a second part of the second data path and for being switchable between at least a first secondary switch state wherein the second data path is established, and a second secondary switch state wherein the second data path is interrupted;
and wherein, the controller unit (120) is configured for generating a secondary control signal based on said data communication information and for sending said secondary control signal to the secondary switch unit (610') to control the secondary switch unit (610') to switch between the first secondary switch state and the second secondary switch state in accordance with said data communication information.

12. The data path management system (100) according to any one of the preceding claims 1-9, wherein the switch unit (110) is located on the second data path, and configured for interfacing a first part of the second data path to a second part of the second data path, wherein the first part of the second data path coincides with the first part of the first data path, and the second part of the second data path at least partially coincided with the second part of the first data path.

13. The data path management system (100) according to any one of the preceding claims, wherein the switch unit (110) comprises an analog-to-digital convertor, a processing unit, and a digital-to-analog convertor.

14. A network termination unit provided with a controller unit which is configured to control a switch unit (110) in a data path management system according to any one of the preceding claims.

15. A switch unit (110) which is configured to be controlled by the controller unit (120) in the data path management system (100) according to any one of the claims 1 - 13.

## Patentansprüche

1. Datenpfadverwaltungssystem (100) zum Verwalten von Datenpfaden in einer Punkt-zu-Mehrpunkt-Topologie, wobei die Punkt-zu-Mehrpunkt-Topologie wenigstens einen ersten Datenpfad zwischen einer ersten Netzabschlusseinheit und einer zweiten Netzabschlusseinheit und einen zweiten Datenpfad zwischen irgendeiner von der ersten und zweiten Netzabschlusseinheit und einer dritten Netzabschlusseinheit umfasst, wobei Datenkommunikation in der Punkt-zu-Mehrpunkt-Topologie von einem Medienzugriffssteuerungs-Scheduler verwaltet wird, wobei das Datenpfadverwaltungssystem umfasst:
- eine auf dem ersten Datenpfad angeordnete Schalteinheit (110), die für eine Schnittstellenbildung eines ersten Teils des ersten Datenpfades mit einem zweiten Teil des ersten Datenpfades ausgelegt ist und dafür ausgelegt ist, zwischen wenigstens einem ersten Schaltzustand, in dem der erste Datenpfad eingerichtet ist, und einem zweiten Schaltzustand, in dem der erste Datenpfad unterbrochen ist, umschaltbar zu sein;
- eine Steuereinheit (120), die dafür ausgelegt ist, von dem Medienzugriffssteuerungs-Scheduler Datenkommunikationsinformationen zu erhalten, die sich darauf beziehen, welche Netzabschlusseinheit mit einer anderen Netzabschlusseinheit während eines gegebenen Zeitschlitzes kommunizieren kann, ein Steuersignal basierend auf den Datenkommunikationsinformationen zu erzeugen und das Steuersignal an die Schalteinheit (110) zu senden, um die Schalteinheit dazu anzusteuern, zwischen dem wenigstens ersten und zweiten Schaltzustand gemäß den erhaltenen Datenkommunikationsinformationen umzuschalten.

2. Datenpfadverwaltungssystem (100) nach Anspruch 1, wobei die Steuereinheit (120) an der ersten Netzabschlusseinheit angeordnet ist und dafür ausgelegt ist, das Steuersignal über den ersten Teil des ersten Datenpfades an die Schalteinheit (110) zu senden.

3. Datenpfadverwaltungssystem (100) nach Anspruch 1 oder 2, wobei der erste Teil des ersten Datenpfades ein erstes physisches Medium umfasst und wobei der zweite Teil des ersten Datenpfades ein zweites physisches Medium umfasst, und wobei die Schalteinheit (110) dafür ausgelegt ist, eine Impedanzanpassung zwischen dem ersten physischen Medium und dem zweiten physischen Medium durchzuführen.

4. Datenpfadverwaltungssystem (100) nach einem der vorhergehenden Ansprüche, wobei die Steuereinheit (120) dafür ausgelegt ist, das Steuersignal basierend auf den Datenkommunikationsinformationen und auf einer vordefinierten Nachschlagtabelle, die Topologieinformationen umfasst, zu erzeugen.

5. Datenpfadverwaltungssystem (100) nach Anspruch 4, wobei sich die Topologieinformationen auf eine Position der Schalteinheit (110) innerhalb der Topologie, verfügbare Schaltzustände der Schalteinheit (110), verfügbare Netzabschlusseinheiten in der Topologie und ihre entsprechenden Positionen innerhalb der Topologie und/oder Verbindungen zwischen der Schalteinheit (110) und irgendeiner der verfügbaren Netzabschlusseinheiten beziehen.

6. Datenpfadverwaltungssystem (100) nach Anspruch 4 oder 5, wobei die Steuereinheit (120) dafür ausgelegt ist, Topologieinformationen zu aufeinander folgenden Zeitpunkten von der Schalteinheit (110), der ersten Netzabschlusseinheit, der zweiten Netzabschlusseinheit und/oder der dritten Netzabschlusseinheit zu erhalten.

7. Datenpfadverwaltungssystem (100) nach einem der vorhergehenden Ansprüche, wobei die Steuereinheit (120) dafür ausgelegt ist, das Steuersignal an die Schalteinheit (110) über wenigstens eine dedizierte Frequenz zu senden, wobei diese wenigstens eine dedizierte Frequenz verschieden von Frequenzen ist, die für Datenkommunikationssignale über den ersten und zweiten Datenpfad verwendet werden.

8. Datenpfadverwaltungssystem (100) nach Anspruch 7, wobei die Steuereinheit (120) dafür ausgelegt ist, das Steuersignal über eine dedizierte Frequenz unter 5 MHz an die Schalteinheit zu senden.

9. Datenpfadverwaltungssystem (100) nach einem der vorhergehenden Ansprüche, wobei die Schalteinheit (110) ein entferntes Leistungsteil umfasst, welches ausgelegt ist zum:
- Empfangen von Strom von der ersten und/oder zweiten Netzabschlusseinheit;
- Zuführen von Strom zu der ersten und/oder zweiten Netzabschlusseinheit, wenn die Schalteinheit (110) an ein Stromnetz angeschlossen ist; und/oder
- Durchleiten von Strom von der ersten zur zweiten Leistungseinheit oder umgekehrt.

10. Datenpfadverwaltungssystem (100) nach einem der vorhergehenden Ansprüche, wobei
- die Schalteinheit (110) auf dem zweiten Datenpfad angeordnet ist und für eine Schnittstellenbildung eines ersten Teils des zweiten Datenpfades mit einem zweiten Teil des zweiten Datenpfades ausgelegt ist, wobei der erste Teil des zweiten Datenpfades mit dem ersten Teil des ersten Datenpfades zusammenfällt, und dafür ausgelegt ist, ferner zwischen wenigstens einem dritten Schaltzustand, in dem der zweite Datenpfad eingerichtet ist, und einem vierten Schaltzustand, in dem der zweite Datenpfad unterbrochen ist, umschaltbar zu sein; und
- die Steuereinheit (120) ferner dafür ausgelegt ist, ein Steuersignal basierend auf den Datenkommunikationsinformationen zu erzeugen und das Steuersignal an die Schalteinheit zu senden, um die Schalteinheit dazu anzusteuern, zwischen dem ersten, zweiten, dritten und vierten Schaltzustand gemäß den Datenkommunikationsinformationen umzuschalten.

11. Datenpfadverwaltungssystem (100) nach einem der vorhergehenden Ansprüche 1-9, welches ferner umfasst:
- eine sekundäre Schalteinheit (610'), die auf dem zweiten Datenpfad angeordnet ist und für eine Schnittstellenbildung eines ersten Teils des zweiten Datenpfades mit einem zweiten Teil des zweiten Datenpfades ausgelegt ist, und dafür, zwischen wenigstens einem ersten sekundären Schaltzustand, in dem der zweite Datenpfad eingerichtet ist, und einem zweiten sekundären Schaltzustand, in dem der zweite Datenpfad unterbrochen ist, umschaltbar zu sein;
und wobei die Steuereinheit (120) dafür ausgelegt ist, ein sekundäres Steuersignal basierend auf den Datenkommunikationsinformationen zu erzeugen und das sekundäre Steuersignal an die sekundäre Schalteinheit (610') zu senden, um die sekundäre Schalteinheit (610') dazu anzusteuern, zwischen dem ersten sekundären Schaltzustand und dem zweiten sekundären Schaltzustand gemäß den Datenkommunikationsinformationen umzuschalten.

12. Datenpfadverwaltungssystem (100) nach einem der vorhergehenden Ansprüche 1-9, wobei die Schalteinheit (110) auf dem zweiten Datenpfad angeordnet ist und für eine Schnittstellenbildung eines ersten Teils des zweiten Datenpfades mit einem zweiten Teil des zweiten Datenpfades ausgelegt ist, wobei der erste Teil des zweiten Datenpfades mit dem ersten Teil des ersten Datenpfades zusammenfällt und der zweite Teil des zweiten Datenpfades wenigstens teilweise mit dem zweiten Teil des ersten Datenpfades zusammenfällt.

13. Datenpfadverwaltungssystem (100) nach einem der vorhergehenden Ansprüche, wobei die Schalteinheit (110) einen Analog-Digital-Umsetzer, eine Verarbeitungseinheit und einen Digital-Analog-Umsetzer umfasst.

14. Netzabschlusseinheit, die mit einer Steuereinheit versehen ist, welche dafür ausgelegt ist, eine Schalteinheit (110) in einem Datenpfadverwaltungssystem nach einem der vorhergehenden Ansprüche zu steuern.

15. Schalteinheit (110), welche dafür ausgelegt ist, von der Steuereinheit (120) in dem Datenpfadverwaltungssystem (100) nach einem der Ansprüche 1-13 gesteuert zu werden.

## Revendications

1. Système de gestion de chemin de données (100) permettant de gérer des chemins de données dans une topologie point multipoint, la topologie point multipoint comportant au moins un premier chemin de données, entre une première unité de terminaison de réseau et une deuxième unité de terminaison de réseau, et un deuxième chemin de données, entre l'une quelconque des première et deuxième unités de terminaison de réseau et une troisième unité de terminaison de réseau, une communication de données dans la topologie point multipoint étant gérée par un planificateur de contrôle d'accès au support, le système de gestion de chemin de données comprenant :
- une unité de commutation (110) située sur le premier chemin de données, configurée pour interfacer une première partie du premier chemin de données avec une deuxième partie du premier chemin de données et configurée pour être commutable entre au moins un premier état de commutation dans lequel le premier chemin de données est établi et un deuxième état de commutation dans lequel le premier chemin de données est interrompu ;
- une unité de contrôle (120) configurée pour obtenir à partir du planificateur de contrôle d'accès au support des informations de communication de données indiquant quelle unité de terminaison de réseau peut communiquer avec une autre unité de terminaison de réseau durant un intervalle de temps donné, pour générer un signal de commande sur la base desdites informations de communication de données, et pour envoyer ledit signal de commande à l'unité de commutation (110) afin d'amener l'unité de commutation à commuter entre lesdits au moins premier et deuxième états de commutation en fonction des informations de communication de données obtenues.

2. Système de gestion de chemin de données (100) selon la revendication 1, dans lequel l'unité de contrôle (120) est située au niveau de la première unité de terminaison de réseau et est configurée pour envoyer le signal de commande à l'unité de commutation (110) par le biais de la première partie du premier chemin de données.

3. Système de gestion de chemin de données (100) selon la revendication 1 ou 2, dans lequel la première partie du premier chemin de données comprend un premier support physique et la deuxième partie du premier chemin de données comprenant un deuxième support physique, et l'unité de commutation (110) étant configurée pour exécuter une adaptation d'impédances entre le premier support physique et le deuxième support physique.

4. Système de gestion de chemin de données (100) selon l'une quelconque des revendications précédentes, dans lequel l'unité de contrôle (120) est configurée pour générer le signal de commande sur la base desdites informations de communication de données et d'une table de consultation prédéfinie comportant des informations de topologie.

5. Système de gestion de chemin de données (100) selon la revendication 4, dans lequel les informations de topologie concernent au moins un élément parmi une position de l'unité de commutation (110) à l'intérieur de la topologie, des états de commutation disponibles de l'unité de commutation (110), des unités de terminaison de réseau disponibles dans la topologie et leurs positions correspondantes à l'intérieur de la topologie, et des interconnexions entre l'unité de commutation (110) et l'une quelconque des unités de terminaison de réseau disponibles.

6. Système de gestion de chemin de données (100) selon la revendication 4 ou 5, dans lequel l'unité de contrôle (120) est configurée pour obtenir des informations de topologie à des moments consécutifs dans le temps à partir d'au moins un élément parmi l'unité de commutation (110), la première unité de terminaison de réseau, la deuxième unité de terminaison de réseau et la troisième unité de terminaison de réseau.

7. Système de gestion de chemin de données (100) selon l'une quelconque des revendications précédentes, dans lequel l'unité de contrôle (120) est configurée pour envoyer ledit signal de commande à l'unité de commutation (110) sur au moins une fréquence dédiée, ladite fréquence dédiée étant différente des fréquences utilisées pour des signaux de communication de données sur les premier et deuxième chemins de données.

8. Système de gestion de chemin de données (100) selon la revendication 7, dans lequel l'unité de contrôle (120) est configurée pour envoyer ledit signal de commande à l'unité de commutation sur une fréquence dédiée inférieure à 5MHz.

9. Système de gestion de données (100) selon l'une quelconque des revendications précédentes, dans lequel l'unité de commutation (110) comprend une unité d'alimentation distante configurée pour :
- être alimentée à partir d'au moins un élément parmi les première et deuxième unités de terminaison de réseau ;
- alimenter au moins un élément parmi les première et deuxième unités de terminaison de réseau lorsque l'unité de commutation (110) est connectée à un réseau électrique ; et/ou
- fournir une alimentation depuis la première vers la deuxième unité de terminaison de réseau, ou vice versa.

10. Système de gestion de chemin de données (100) selon l'une quelconque des revendications précédentes, dans lequel :
- l'unité de commutation (110) est située sur le deuxième chemin de données, et configurée pour interfacer une première partie du deuxième chemin de données avec une deuxième partie du deuxième chemin de données, la première partie du deuxième chemin de données coïncidant avec la première partie du premier chemin de données, et en outre pour être commutable entre au moins un troisième état de commutation dans lequel le deuxième chemin de données est établi, et un quatrième état de commutation dans lequel le deuxième chemin de données est interrompu ; et
- l'unité de contrôle (120) est en outre configurée pour générer un signal de commande sur la base desdites informations de communication de données, et pour envoyer ledit signal de commande à l'unité de commutation afin d'amener l'unité de commutation à commuter entre les premier, deuxième, troisième et quatrième états de commutation en fonction des informations de communication de données.

11. Système de gestion de chemin de données (100) selon l'une quelconque des revendications précédentes 1-9, comprenant en outre :
- une unité de commutation secondaire (610') située sur le deuxième chemin de données et configurée pour interfacer une première partie du deuxième chemin de données avec une deuxième partie du deuxième chemin de données et pour être commutable entre au moins un premier état de commutation secondaire dans lequel le deuxième chemin de données est établi, et un deuxième état de commutation secondaire dans lequel le deuxième chemin de données est interrompu ; et l'unité de contrôle (120) étant configurée pour générer un signal de commande secondaire sur la base desdites informations de communication de données et pour envoyer ledit signal de commande secondaire à l'unité de commutation secondaire (610') afin d'amener l'unité de commutation secondaire (610') à commuter entre le premier état de commutation secondaire et le deuxième état de commutation secondaire en fonction desdites informations de communication de données.

12. Système de gestion de chemin de données (100) selon l'une quelconque des revendications précédentes 1-9, dans lequel l'unité de commutation (110) est située sur le deuxième chemin de données, et configurée pour interfacer une première partie du deuxième chemin de données avec une deuxième partie du deuxième chemin de données, la première partie du deuxième chemin de données coïncidant avec la première partie du premier chemin de données, et la deuxième partie du deuxième chemin de données coïncidant au moins partiellement avec la deuxième partie du premier chemin de données.

13. Système de gestion de chemin de données (100) selon l'une quelconque des revendications précédentes, dans lequel l'unité de commutation (110) comprend un convertisseur analogique / numérique, une unité de traitement, et un convertisseur numérique / analogique.

14. Unité de terminaison de réseau comportant une unité de contrôle qui est configurée pour contrôler une unité de commutation (110) dans un système de gestion de chemin de données selon l'une quelconque des revendications précédentes.

15. Unité de commutation (110) qui est configurée pour être contrôlée par l'unité de contrôle (120) dans le système de gestion de chemin de données (100) selon l'une quelconque des revendications 1-13.
